# FASCICULE DE BREVET EUROPEEN

(11) **EP 0 655 272 B1**
(45) Date de publication et mention de la délivrance du brevet: **02.06.1999**
(21) Numéro de dépôt: 94402584.0
(22) Date de dépôt: 16.11.1994
(51) Int. Cl.: B01D 53/22

(54) **Procédé et installation de fourniture d'azote au moyen de membranes semi-perméables utilisant une géométrie membranaire variable**
Verfahren und Vorrichtung zur Stickstoffbereitstellung mittels semipermeablen Membranen in einer variablen Membrangeometrie
Process and installation for nitrogen provision by semipermeable membranes using a variable membrane geometry

(30) Priorité: 26.11.1993 FR 9314174
(43) Date de publication de la demande: 31.05.1995
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Barry, Lionel, F-78000 Versailles (FR)
(74) Mandataire: Le Moenner, Gabriel

(56) Documents cités:
- EP-A- 0 054 941
- EP-A- 0 359 149
- EP-A- 0 409 545
- EP-A- 0 520 863
- US-A- 4 397 661

## Description

La présente invention concerne la fourniture d'azote de pureté variable utilisant la séparation membranaire. Une telle séparation membranaire est par exemple décrite dans EP-A-0 520 863. L'invention s'applique tout particulièrement aux cas où il est nécessaire d'alimenter un utilisateur dont les besoins en débit d'azote peuvent varier dans une gamme de débit relativement large.

La production d'azote par des moyens tels que membranes (on utilise aussi souvent le terme de "module membranaire") ou modules d'adsorption préférentielle, dans les deux cas souvent appelés moyens sur site ou "on-site", s'est considérablement développée ces dernières années, partout dans le monde, en complément de la production traditionnelle par voie cryogénique, car ils présentent les avantages suivants :
- une excellente sécurité d'approvisionnement;
- de faibles coûts de production;
- la possibilité de fournir, à des coûts très attractifs, selon les applications considérées, des azotes de pureté adaptée, parfois appelés "azotes impurs", dans la mesure où la concentration résiduelle en oxygène dans ces azotes peut varier de quelques milliers de ppm (parties par million) à quelques %.

Dans le cas particulier des membranes semi-perméables, le principe est que, sous l'effet d'une différence de pression partielle de part et d'autre de la membrane, on obtient, côté perméat, un mélange obtenu à basse pression, enrichi en composants les plus perméables; on obtient en sortie de membrane (aussi appelée côté "résidu" ou coté "rejet"), un mélange à une pression proche de la pression d'alimentation (du mélange entrant) et qui est enrichi en composants les moins perméables.

On utilise ainsi pour produire de l'azote "impur" à partir d'air, des membranes semi-perméables présentant de bonnes propriétés de séparation de l'azote par rapport à l'oxygène (sélectivité), par exemple du type polyimide ou polyaramide, le mélange enrichi en oxygène étant obtenu côté perméat.

On comprend dès lors que les performances obtenues dépendront très largement des conditions d'utilisation de la membrane, telles que la température, la pression d'alimentation de la membrane, ou encore la teneur du mélange d'alimentation en le composant que l'on souhaite séparer côté perméat.

On sait ainsi pour ce qui est de la température, qu'à une température élevée (80 °C par exemple), la productivité de la membrane augmente, mais la sélectivité O₂/N₂ de la membrane se dégrade. Dans ce contexte, on fonctionne souvent dans des conditions où l'on joue sur le paramètre température :
- pour produire de l'azote de pureté réduite (5% de résiduel d'oxygène par exemple), on utilise un air comprimé porté à une température relativement élevée (60 °C par exemple).
- pour produire de l'azote de pureté élevée (1000 ppm de résiduel d'oxygène par exemple), on peut utiliser un air comprimé porté à une température relativement basse, souvent proche de la température ambiante ou plus basse.

Toujours dans le cas des membranes, on observe néanmoins un certain nombre d'inconvénients liés au caractère peu flexible de ce moyen de production "on site", en particulier en ce qui concerne les débits d'azote que nécessite et qu'utilise effectivement l'utilisateur. Il est ainsi particulièrement difficile de dimensionner au départ l'installation de production d'azote "on site" d'un utilisateur dont les besoins en débit peuvent varier autour d'une valeur nominale considérée comme moyenne par cet utilisateur, la gamme de débit où pourra évoluer le débit pouvant être plus ou moins étendue. De même, Il est aussi particulièrement difficile de dimensionner au départ l'installation de production d'azote "on site" d'un utilisateur dont les besoins en débit vont nécessairement évoluer au cours du temps du fait d'une évolution de la production liée à des marchés gagnés ou perdus selon les circonstances (entraînant par exemple l'achat de nouveaux fours travaillant sous azote).

Pour répondre à cette difficulté, les solutions actuellement rencontrées proposent par exemple de mettre en place sur le site utilisateur une capacité tampon lorsque ponctuellement, les besoins en azote sont diminués ou augmentés. Cette méthode ne peut raisonnablement accommoder que des variations modérées de consommation, et de faible durée.

Une autre solution consiste, pour les hausses de consommation, à mettre en place une réserve d'azote liquide produit par voie cryogénique, cette solution ayant bien évidemment pour inconvénient son coût additionnel.

D'autres solutions, plus élaborées, supposent généralement une modification de la source d'air traitée, entraînant des conséquences négatives en terme d'investissement, ou encore de temps de réponse de l'équipement lorsque le poste utilisateur doit passer rapidement d'un débit nominal à un débit augmenté ou diminué.

On peut ainsi citer l'exemple du document US-A-4,806,132 qui concerne le cas où la membrane (en particulier dans le cas de la production d'azote) doit pouvoir produire le cas échéant un débit plus faible que le débit nominal de croisière utilisé, ceci que la pureté initiale de l'azote doive être maintenue ou qu'elle puisse subir une certaine dégradation. Le document cite l'exemple d'une consommation d'azote "on site" qui pourrait décroître de 30 % par rapport à un débit nominal. Ce document propose comme solution de modifier la source d'air en diminuant le débit du compresseur et la pression de l'air fourni, cela en jouant sur des paramètres tels qu'ouverture de vannes en aval du compresseur ou encore sur les variables moteur de ce compresseur. Ce mode d'action oblige donc à modifier la source d'air ce qui représente une complexité non négligeable, d'où des conséquences en terme d'instrumentation et donc d'investissement.

On peut aussi citer l'exemple du document EP-A-0 517 570, où l'objectif est de pouvoir s'adapter à une consommation qui s'accroît ou qui diminue, avec le cas échéant aussi une évolution en terme de pureté d'azote requise. La solution proposée dans les cas où une surconsommation se produit sur le site, sur une large gamme de débit, consiste à augmenter le débit d'air traité (en augmentant par exemple le nombre de compresseurs ou encore en ayant surdimensionné le compresseur) et en parallèle à augmenter la perméabilité de la membrane en jouant sur la température. Cette solution présente alors des inconvénients en terme d'investissement, d'augmentation de l'instrumentation, et de temps de réaction de l'équipement (en particulier à la température).

On peut enfin citer l'exemple du document US-A-4,397,661 qui envisage un cas différent puisqu'il évoque le cas du traitement et de la séparation d'un mélange gazeux sur un ensemble de membranes où contrairement aux cas précédents, c'est le débit du mélange entrant qui est susceptible de variations, comme c'est le cas pour la séparation de l'hydrogène d'un mélange H₂/N₂/CH₄/Ar produit par une installation quelconque comme celle d'une raffinerie. De plus, l'élément que l'on cherche ici à séparer est obtenu côté perméat de la membrane. La solution proposée dans ce document suppose la mise en oeuvre d'une surface variable de membrane, plus le débit à traiter est élevé plus le nombre de membranes mises en service (en parallèle) est élevé, cela en essayant de maintenir constante la concentration de l'élément perméable du côté perméat des membranes. Le perméat de chacune des membranes est ainsi raccordé à une ligne commune de récupération.

Dans ce contexte, l'objet de la présente invention est de proposer un procédé amélioré de fourniture d'azote de pureté variable, utilisant la séparation membranaire, permettant d'accommoder des augmentations de consommation (donc des augmentations du débit d'azote requis), y compris dans de larges proportions par rapport à un débit nominal, cela sans avoir à modifier la source d'air en aucune façon, et dans des cas où des variations de la pureté sont admissibles.

Pour ce faire, le procédé selon l'invention comporte les étapes suivantes :
a) on fait passer de l'air comprimé par un compresseur d'air via la partie amont d'une ligne principale dans un ensemble de séparation constitué d'au moins deux lignes de séparation membranaire montées en parallèle, chaque ligne comportant un séparateur membranaire, et au moins une des lignes de séparation pouvant être isolée de la ligne principale par des moyens d'isolation , en adoptant selon les cas une des configurations suivantes :
a1) lorsque les besoins en débit du site se situent au niveau du débit nominal, tous les séparateurs membranaires de l'ensemble de séparation sont en service, aucune des lignes de séparation n'étant isolée;
a2) lorsque les besoins en débit du site dépassent un débit prédéterminé, on isole au moins une des lignes de l'ensemble de séparation, en conservant au moins une ligne de séparation et son séparateur membranaire en service;
b) le gaz obtenu coté rejet de chacun des séparateurs membranaires en service de l'étape a) est dirigé sur un collecteur, lui même raccordé en aval à une partie aval de la ligne principale;
c) le gaz obtenu du coté perméat de chacun des séparateurs membranaires en service de l'étape a), enrichi en oxygène, est rejeté vers l'atmosphère extérieure ou dirigé vers un poste utilisateur nécessitant l'emploi d'un tel gaz enrichi en oxygène;
d) le gaz issu du collecteur est envoyé le long de la partie aval de la ligne principale vers au moins un poste utilisateur, via un dispositif de contrôle du débit délivré par le collecteur qui, le cas échéant, augmente ou diminue ce débit.

Avec le procédé selon l'invention, on obtient donc de façon surprenante une augmentation de débit de gaz de production, en mettant en oeuvre une réduction de la surface active de membrane.

Selon un des aspects de l'invention, lorsque les besoins en débit du site repassent en deçà du débit prédéterminé de l'étape a2), on entre dans une phase a3) où l'on remet en service la ou les lignes qui avaient été isolées au stade a2).

Par "séparateur membranaire", on entend selon l'invention, un ensemble d'une ou plusieurs membranes (ou modules membranaires) semi-perméables montées en série ou en parallèle, présentant de bonne propriétés de séparation de l'oxygène par rapport à l'azote (sélectivité) comme c'est le cas par exemple pour des membranes type polyimide ou encore polyaramide.

Par "moyens d'isolation", on entend selon l'invention tous moyens permettant que l'air à traiter ne puisse passer dans la ligne que l'on souhaite isoler (ou "fermer"), ce moyen pouvant être par exemple présent à l'entrée de la ligne mais aussi à la sortie de la ligne (avant son point de raccordement avec la ligne principale en aval) pour éviter une éventuelle remontée de gaz; on pourra aussi envisager la présence d'un moyen d'isolation en entrée de ligne et d'un autre moyen d'isolation à la sortie perméat du séparateur membranaire considéré, ou encore la combinaison d'un moyen d'isolation en sortie de ligne et d'un autre moyen d'isolation à la sortie perméat du séparateur membranaire considéré. On peut envisager comme moyen d'isolation selon l'invention, par exemple des moyens mécaniques manuels tels que des vannes quart de tour, ou encore des moyens automatiques déclenchés à distance tels que des électrovannes.

Les opérations d'isolation d'une ligne de séparation ou de remise en service d'une ligne de séparation intervenant dans les cas a2) ou a3) de l'étape a) seront déclenchées, le cas échéant, par un signal qui peut être émis manuellement tel que par un bouton poussoir (par exemple situé au niveau du poste utilisateur), ou automatiquement tel que celui obtenu par une sécurité sur un niveau bas de pression, le niveau de pression pouvant être évalué sur la ligne principale ou le cas échéant dans une capacité tampon. L'isolation des lignes pourra aussi tout simplement s'effectuer manuellement, sans signal déclenchant, par la simple volonté et intervention d'un opérateur. En considérant l'exemple de la sécurité de pression, le site utilisateur augmentant à un moment donné sa consommation fera chuter la pression sur la ligne principale ce qui, en deçà d'un certain niveau de pression à définir dans chaque cas, permettra de déclencher l'opération d'isolation de ligne(s) évoquée plus haut.

On entend par "collecteur", selon l'invention, aussi bien un simple point de raccordement sur la ligne principale où viennent se raccorder l'aval de toutes les lignes de séparation de l'ensemble de séparation, qu'un dispositif adéquat situé sur la ligne principale, en aval de l'ensemble de séparation, définissant un volume permettant de récupérer le gaz issu de chacune des lignes en service de l'ensemble de séparation.

Par "dispositif de contrôle de débit", on entend selon l'invention, un moyen permettant au moins de modifier le cas échéant ce débit, pour l'augmenter ou le diminuer si l'on se trouve dans des phases type a2) ou a3). On pourra ainsi utiliser l'un quelconque des moyens de variation d'un débit, qu'il soit manuel ou automatique (par exemple : limiteur, vanne manuelle de réglage ou encore régulateur de débit massique...). Le cas échéant, ce débit, une fois modifié, pourra être régulé c'est à dire maintenu en permanence à une valeur prédéfinie. Le "dispositif de contrôle de débit" selon l'invention comprendra alors en outre, des moyens de régulation tels qu'un coffret de régulation agissant sur un régulateur de débit massique, ou encore un automate programmable etc..

Selon un des aspects de l'invention, on effectue durant l'étape d), une mesure du débit délivré par le collecteur et/ou une mesure de la concentration résiduelle d'oxygène dans le gaz délivré par le collecteur et/ou une mesure de la pression du gaz issu du collecteur, et une régulation du dit débit en utilisant comme variable d'entrée une des dites mesures.

Selon une des mises en oeuvre de l'invention, la régulation du débit est obtenue de la façon suivante : l'aval de la ligne principale en aval du dispositif de contrôle de l'étape d) se subdivise en au moins deux lignes secondaires, chacune de ces lignes étant isolable séparément, et équipée d'un régulateur de débit (qu'il soit par exemple de type mécanique ou encore automatique comme par exemple un régulateur de débit massique) compatible avec une gamme de débit déterminée, l'aval de chacun de ces régulateurs étant connecté à nouveau à la ligne principale, et selon que l'on se trouve dans les cas a1) a2) ou a3), on fait passer le gaz issu du dit dispositif de contrôle sur la ligne secondaire dont le régulateur de débit possède une gamme de débit admissible compatible avec la valeur du débit que l'on souhaite réguler, ou encore dans certains cas sur plusieurs de ces lignes.

Selon un des aspects de l'invention, l'ensemble de séparation met en oeuvre des membranes de type et/ou performances différents, ce qui permet de valoriser, pour ces séparateurs membranaires, des membranes issues d'un même lot de fabrication de membranes ou de lots différents, mais présentant des performances variables du fait d'un écart type normal de fabrication.

Les critères pris en compte pourront ainsi être la productivité de la membrane (c'est à dire le débit d'azote obtenu dans des conditions données de température, pression, surface de membrane et pureté d'azote produit), ou le rendement de la membrane (c'est à dire le rapport du débit d'azote produit au débit d'air traité, dans des conditions données de température, pression, surface de membrane et pureté d'azote produit).

Selon une des mises en oeuvre de l'invention, dans le cas a2) de l'étape a), on choisi d'isoler le ou les séparateurs membranaires parmi les moins performants des séparateurs membranaires de l'ensemble de séparation. L'azote produit en sortie du collecteur contient typiquement une concentration résiduelle d'oxygène se situant dans la gamme [0,1%, 10%].

Comme il apparaîtra clairement à l'homme du métier, la gamme de débits dans laquelle évoluera la consommation du site, située entre un débit nominal et une limite haute représentant le pic de consommation du site, variera bien entendu d'un site à l'autre et devra donc être définie au cas par cas. Il en est de même pour le débit à prédéfinir qui déclenche (en a2)), l'isolation de une ou plusieurs lignes de séparation, ce "débit prédéterminé", au sens de l'invention pouvant être le débit nominal lui même mais aussi un débit situé dans la gamme débit nominal-pic de consommation.

En fait, comme il apparaîtra clairement à l'homme du métier, le procédé selon l'invention permet, de façon très flexible, de traiter des situations intermédiaires entre le débit nominal et la limite haute de débit, en fermant y compris "une par une" les lignes de séparation, et en les ouvrant "une par une" si nécessaire au retour.

Dans les cas où une capacité tampon est présente en bout de ligne, on pourra prendre en compte des niveaux de débit (nominal, pic...) mais aussi de façon équivalente des pressions dans la capacité tampon : une chute de pression dans la capacité en deçà d'un certain niveau de pression, que l'on peut relier à une augmentation de débit au dessus d'un certain niveau de débit, déclenchant la fermeture d'au moins une des lignes de séparation. La capacité tampon pouvant être par ailleurs utilisée, de façon classique, pour lorsque de façon ponctuelle, la consommation chute en dessous du débit nominal, arrêter le système de production et fonctionner sur la réserve accumulée dans la capacité tampon, ou encore pour, en régime nominal, arrêter régulièrement le système (qui fonctionne pour le régime nominal sur l'ensemble des séparateurs) pour fonctionner sur la base de la réserve accumulée dans la capacité tampon, puis la remplir à nouveau en faisant redémarrer le système (toutes lignes en service) etc....

On pourra aussi imaginer des situations où l'on prendra en compte des dérivées (vitesse de variation) du débit ou de la pression. Ou encore, des cas particuliers où le changement de configuration interviendra à heure fixe chaque jour (par exemple pour effectuer une purge toutes les deux heures ou encore pour effectuer à fort débit une purge de l'installation systématiquement à son démarrage).

L'invention concerne aussi une installation de fourniture d'azote convenant notamment pour la mise en oeuvre du procédé selon l'invention, comprenant une ligne principale, un compresseur d'air et au moins un poste utilisateur et comprenant, le long de la ligne principale, entre le compresseur d'air et au moins un poste utilisateur :
- un ensemble de séparation constitué d'au moins deux lignes de séparation membranaire montées en parallèle, chaque ligne comportant un séparateur membranaire, au moins une des lignes de séparation comportant des moyens permettant de l'isoler, et chaque séparateur membranaire étant muni d'une ligne d'évacuation de son perméat vers l'extérieur et d'une ligne d'évacuation de son rejet,
- un collecteur situé entre l'ensemble de séparation et une partie aval de la ligne principale, collecteur sur lequel viennent se raccorder toutes les lignes d'évacuation du rejet des séparateurs membranaires de l'ensemble de séparation,
- et un dispositif de contrôle du débit délivré par le collecteur, situé entre le collecteur et le ou les postes utilisateurs en bout de ligne.

Selon un des aspects de l'invention, l'installation selon l'invention comprend au moins une station de conditionnement d'air, intercalée entre le compresseur d'air et l'ensemble de séparation membranaire et permettant de réaliser des opérations telles que déshuilage, filtrage, séchage ou encore mise en température éventuelle de l'air.

Selon un aspect de l'invention, l'aval de la ligne principale comprend, en aval du dispositif de contrôle de débit, une capacité tampon.

Selon un aspect de l'invention, l'installation comprend de plus, un moyen permettant de déclencher l'isolation ou la remise en service d'une ou de plusieurs des lignes de l'ensemble de séparation. Ce moyen peut être par exemple manuel tel qu'un bouton poussoir, ou automatique tel que celui obtenu par une sécurité sur un niveau bas de pression.

Selon un des aspects de l'invention, la partie aval de la ligne principale en aval du dispositif de contrôle de débit se subdivise en au moins deux lignes secondaires, chacune de ces lignes étant isolable séparément, et équipée d'un régulateur de débit (qu'il soit de type mécanique ou automatique par exemple du type régulateur de débit massique) compatible avec une gamme de débit déterminée, l'aval de chacun de ces régulateurs étant connecté à nouveau à la ligne principale, en amont du poste utilisateur.

L'ensemble de séparation pourra le cas échéant, selon l'invention, mettre en oeuvre des membranes de type et/ou performances différents.

Selon une des mise en oeuvre de l'invention, au moins l'un des séparateurs membranaires de l'ensemble de séparation est constitué de membranes du type polyimide ou du type polyaramide.

D'autres caractéristiques et avantages de la présente invention ressortiront de la description suivante de modes de réalisation donnés à titre illustratif mais nullement limitatif, faite en relation avec les dessins annexés, sur lesquels :
- la figure 1 est une vue schématique d'une installation convenant pour la mise en oeuvre du procédé selon l'invention, et permettant d'alimenter en azote un site dont la consommation se situe alternativement à un débit nominal ou à un pic de consommation.
- la figure 2 est une vue schématique donnant le détail du dispositif de contrôle de débit de la figure 1.
- la figure 3 est une vue schématique d'une autre installation convenant pour la mise en oeuvre du procédé selon l'invention, et permettant d'alimenter en azote un site dont la consommation se situe indifféremment à un niveau nominal, au niveau d'un pic de consommation, ou à un niveau intermédiaire entre ces deux points.

La figure 4 est une vue schématique donnant le détail du dispositif de contrôle de débit de la figure 3.

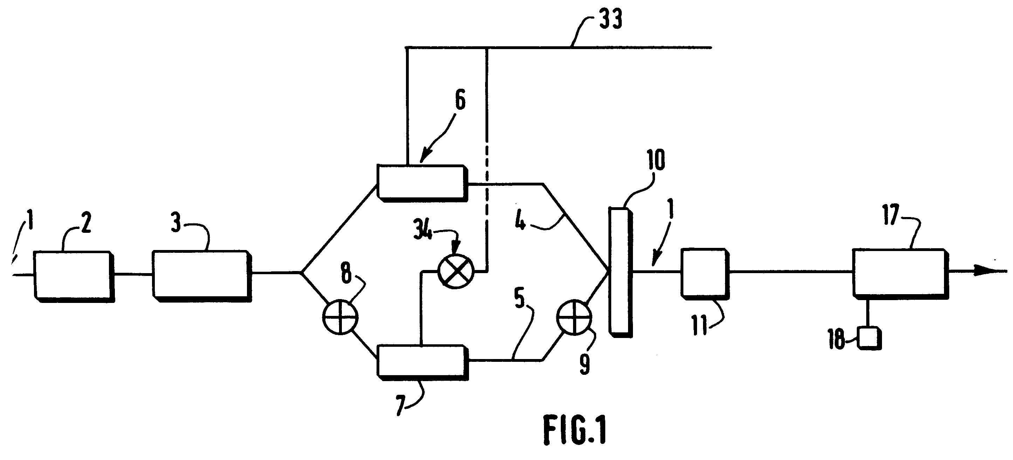

On reconnaît sur la figure 1, le long d'une ligne principale 1, un compresseur d'air 2 typiquement à vis lubrifié, fournissant de l'air comprimé à par exemple 13 x 10⁵ Pa absolus, une station de conditionnement d'air 3 comprenant typiquement un sécheur (du type séparateur centrifuge), un déshuileur (incluant par exemple une tour à charbon), un filtre à particules et un réchauffeur par exemple électrique portant l'air comprimé à une température supérieure à la température ambiante, par exemple à 45°C.

En sortie de station de conditionnement, l'air ainsi conditionné, arrive sur un ensemble de séparation comprenant, dans le mode de réalisation représenté, deux lignes de séparation 4 et 5 en parallèle. Chacune de ces lignes comprend un séparateur membranaire (respectivement 6 et 7). La ligne 5 comprend en outre en son entrée et en sa sortie une vanne d'isolation du type "tout ou rien" (8 et 9).

Le séparateur membranaire 6 de la ligne 4 est constitué par exemple de 4 modules membranaires du type à fibres creuses dont la couche active est un polyimide, montés en parallèle, et dont les caractéristiques permettent l'obtention d'une surface totale d'échange d'environ 130 m² par module. On a sélectionné pour cette ligne les modules offrant le meilleur rendement de séparation. Le séparateur membranaire 7 de la ligne 5 est alors constitué de 2 modules membranaires montés en parallèle, de même type et surface d'échange que ceux du séparateur 6.

On notera que dans chaque cas, le séparateur est monté avec une vanne de laminage en sortie de séparateur (non représentée) permettant d'accommoder les différences de performances individuelles entre les membranes de l'ensemble quand les deux lignes sont simultanément en service.

Un collecteur 10 est disposé en sortie de l'ensemble de séparation, aboutissent dans ce collecteur l'aval des lignes 4 et 5 (donc le rejet des séparateurs membranaires 6 et 7), l'aval du collecteur 10 étant raccordé à un dispositif de contrôle du débit 11 délivré par ce collecteur.

On notera que le côté perméat de chacun des séparateurs 6,7 de l'ensemble de séparation est évacué, via une ligne 33, vers l'extérieur de l'installation ou encore vers un poste utilisateur du site nécessitant l'emploi d'un gaz enrichi en oxygène.

On notera d'autre part la présence d'une vanne d'isolation 34, situé à la sortie perméat du séparateur 7.

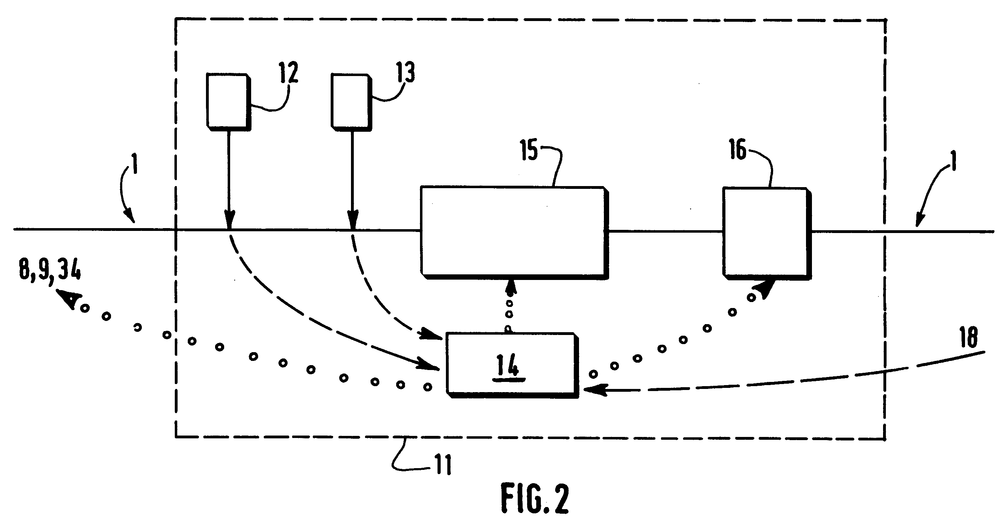

La figure 2 précise les éléments constitutifs du dispositif 11 de la figure 1, qui comprend un débitmètre 12 (par exemple du type Vortex), un analyseur d'oxygène 13, un automate programmable 14, agissant notamment sur une vanne de régulation 15, et une vanne "tout ou rien" 16 en aval de la vanne 15.

Sur la figure 1, on a représenté, en aval du dispositif 11, une capacité tampon 17 munie d'un capteur de pression 18.

Le ou les postes utilisateurs en aval de la capacité tampon n'ont pas été représentés sur la figure 1.

L'automate programmable 14 peut rassembler à lui seul les fonctions suivantes :
- réception (flèches discontinues tirets) d'informations de débit (12) et de concentration d'oxygène (13).
- réception (flèches discontinues tirets) d'une information de baisse (ou de remontée) de pression au niveau de la capacité tampon 17 (par le capteur 18)
- action (flèches discontinues pointillées) sur les vannes 8 et 9 (ou 8 et 34 ou encore 9 et 34) pour isoler (ou remettre en service) la ligne 5 et action sur la vanne de régulation 15 pour le cas échéant l'ouvrir davantage ou la refermer, en tenant compte pour cette régulation du paramètre débit ou bien du paramètre concentration d'oxygène.

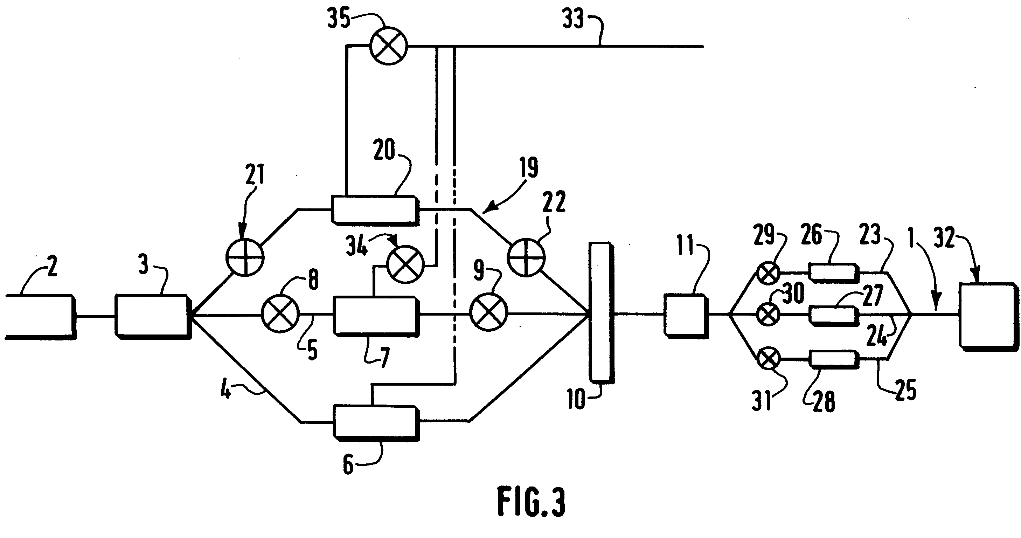

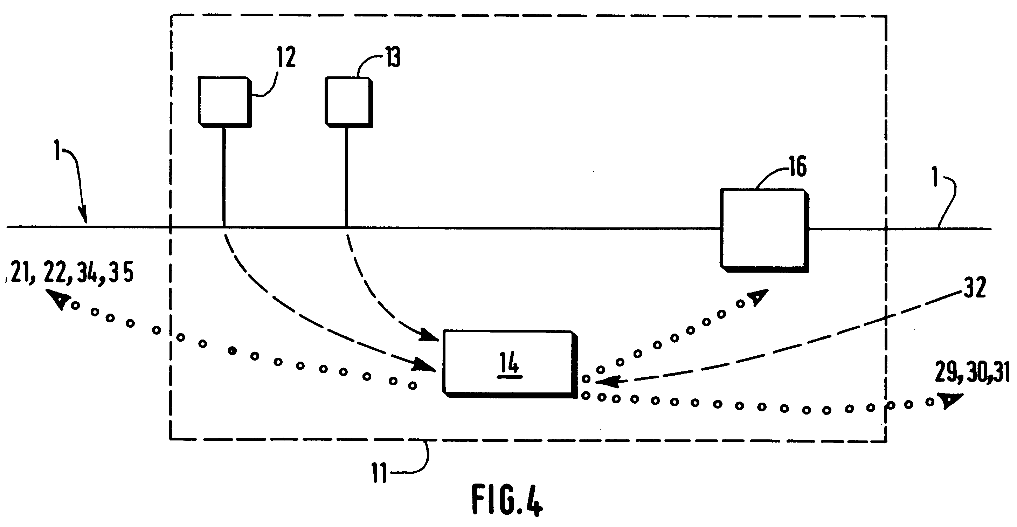

La figure 3 illustre le cas d'une installation où il est nécessaire de prévoir un débit intermédiaire entre le débit nominal et le pic de consommation. Outre les éléments 2 (compresseur), 3 (conditionnement) et 10 (collecteur) de même type que ceux décrits dans le cadre de la figure 1, ainsi que les deux premières lignes de séparation 4 et 5, on reconnaît sur cette figure une troisième ligne de séparation 19 comportant un séparateur membranaire 20, qui peut être isolée par des vannes "tout ou rien" 21 et 22 disposées de part et d'autre du séparateur 20, les trois lignes débouchant en aval dans le collecteur 10. En sortie du dispositif de contrôle de débit 11 (dont le détail sera donné plus loin dans le cadre de la figure 4), le gaz de production rencontre un réseau de trois lignes en parallèle 23, 24,25, chacune équipée pour le mode de réalisation représenté d'un régulateur de débit mécanique 26, 27, 28 et pouvant être isolée en amont par une vanne 29, 30, 31, les conduits aval de ce réseau rejoignant la partie aval de la ligne principale 1, vers un poste utilisateur 32, en transitant ou pas par une capacité tampon 17 (non représentée sur la figure 3). Ce poste utilisateur est équipé de boutons poussoirs manuels (non représentés) permettant à l'utilisateur de passer manuellement du régime "débit nominal" au régime "pic de consommation", le cas échéant en transitant par le régime "débit intermédiaire".

Le séparateur membranaire 20 sera dimensionné (type de membrane, nombre de membranes et surface d'échange) en fonction de la position du débit intermédiaire à délivrer dans l'intervalle [débit nominal-pic de consommation].

On note, ici encore, que le côté perméat de chacun des séparateurs 6,7, 20 de l'ensemble de séparation est évacué, via une ligne 33, vers l'extérieur de l'installation ou encore vers un poste utilisateur du site nécessitant l'emploi d'un gaz enrichi en oxygène, et la présence de vannes d'isolation 34 et 35 placées respectivement à la sortie perméat des séparateurs 7 et 20, qui peuvent aussi être utilisées pour l'isolation des lignes.

La figure 4 précise la constitution du dispositif 11 dans ce cas. Il comporte ici outre le débitmètre 12, l'analyseur d'oxygène 13 et la vanne tout ou rien 16, un automate programmable 14 rassemblant ici les fonctions suivantes :
- réception (flèches discontinues tirets) des informations de débit (12) et de concentration d'oxygène (13).
- réception (flèches discontinues tirets) d'un signal issu du poste 32 (bouton poussoir) ou encore d'une information de baisse (ou de remontée) de pression au niveau de la capacité tampon 17 (par le capteur 18).
- action (flèches discontinues pointillées) sur les vannes 8, 9, 21, 22, 34, 35 pour isoler (ou remettre en service) une des lignes 5, 19 selon que l'on passe du débit nominal (toutes les lignes en service) au débit intermédiaire (une ligne fermée) au pic de consommation (une seconde ligne fermée).
- action (flèches discontinues pointillées) sur les vannes d'isolation 29, 30, 31 des lignes de dérivation 23, 24, 25 , de façon à faire passer, pour chaque cas de débits cités plus haut, le flux de gaz issu du collecteur par le régulateur de débit dont la gamme correspond au débit que l'on souhaite réguler, ceci étant effectué en tenant compte pour cette régulation par exemple du paramètre débit (12) ou bien du paramètre concentration d'oxygène (13).

On remarque sur cette figure 4 l'absence de la vanne de régulation 15 puisque le réseau de lignes secondaires 23, 24, 25 joue ici ce rôle de régulation du débit.

Dans un exemple de réalisation, une installation telle que celle décrite en relation avec la figure 1 a été utilisée pour alimenter un poste utilisateur dans les conditions suivantes (on régule ici sur la concentration d'oxygène résiduel) :
- pour un fonctionnement du poste utilisateur en régime de croisière (débit nominal), l'installation fonctionne sur les deux séparateurs membranaires en même temps. Dès que la pression dans la capacité tampon atteint 10⁶ Pa, on arrête le compresseur, et on ferme la vanne 16. Le poste fonctionne donc sur la réserve accumulée dans la capacité tampon. Au fur et à mesure que cette réserve diminue, la pression baisse dans la capacité tampon. En deçà de 7 x 10⁵ Pa, l'installation redémarre (compresseur, les deux lignes de séparation en même temps ...). Le poste utilisateur consomme durant ce régime de croisière 100 Nm³/h d'azote à 1% d'oxygène résiduel.
- pour un fonctionnement au niveau du pic de consommation du poste utilisateur, on déclenche, quand la pression dans la capacité tampon atteint 6 x 10⁵ Pa, la fermeture de la ligne 5 par l'automate programmable 14 (isolation par le couple de vannes 8, 9), et on change (toujours grâce à l'automate) la consigne du régulateur prenant en compte la teneur en oxygène, en la faisant passer de 1 % à 4.5 %, entraînant l'ouverture correspondante de la vanne de régulation 15. Le poste utilisateur consomme durant ce régime de pic 165 Nm³/h d'azote à 4,5 % d'oxygène résiduel.
- quand la consommation d'azote du poste utilisateur redescend du débit de pic au débit nominal, on suit le chemin inverse.

## Revendications

1. Procédé de fourniture d'azote à un site dont la consommation varie dans une gamme donnée située au dessus d'un débit nominal, comprenant les étapes suivantes :
a) on fait passer de l'air comprimé par un compresseur d'air (2) via la partie amont d'une ligne principale (1), dans un ensemble de séparation constitué d'au moins deux lignes de séparation membranaire (4,5) montées en parallèle, comportant chacune un séparateur membranaire (6,7), au moins une des lignes de séparation pouvant être isolée de la ligne principale par des moyens d'isolation (8,9, 34), en adoptant selon les cas une des configurations suivantes :
a1) Lorsque les besoins en débit du site se situent au niveau du débit nominal, tous les séparateurs membranaires de l'ensemble de séparation sont en service, aucune des lignes de séparation n'étant isolée;
a2) Lorsque les besoins en débit du site dépassent un débit prédéterminé, on isole au moins une des lignes (5) de l'ensemble de séparation, en conservant au moins une ligne de séparation (4) et son séparateur membranaire en service;
b) Le gaz obtenu du côté rejet de chacun des séparateurs membranaires en service de l'étape a) est dirigé sur un collecteur (10), lui même raccordé en aval à une partie aval de la ligne principale;
c) Le gaz obtenu du coté perméat de chacun des séparateurs membranaires en service de l'étape a), enrichi en oxygène, est rejeté vers l'atmosphère extérieure ou dirigé vers un poste utilisateur nécessitant l'emploi d'un tel gaz enrichi en oxygène;
d) Le gaz délivré par le collecteur (10) est envoyé le long de la partie aval de la ligne principale vers au moins un poste utilisateur (32) via un dispositif (11) de contrôle du débit délivré par le collecteur (10) qui le cas échéant, augmente ou diminue ce débit.

2. Procédé selon la revendication 1, caractérisé en ce que lorsque les besoins en débit du site repassent en deçà du débit prédéterminé de l'étape a2), on entre dans une phase a3) où l'on remet en service la ou les lignes qui avaient été isolées au stade a2).

3. Procédé selon l'une des revendications 1 ou 2, caractérisé en ce que l'on effectue durant l'étape d) une régulation du dit débit.

4. Procédé selon l'une des revendications 1 à 3, caractérisé en ce que l'on effectue durant l'étape d), une mesure du débit délivré par le collecteur et/ou une mesure de la concentration résiduelle d'oxygène dans le gaz délivré par le collecteur et/ou une mesure de la pression du gaz issu du collecteur, et une régulation du dit débit en utilisant comme variable d'entrée une des dites mesures.

5. Procédé selon l'une des revendications 3 ou 4, caractérisé en ce que la régulation du dit débit est obtenue de la façon suivante : l'aval de la ligne principale en aval du dispositif de contrôle de l'étape d) se subdivise en au moins deux lignes secondaires (23, 24, 25), chacune de ces lignes étant isolable séparément, et équipée d'un régulateur de débit (26, 27, 28) compatible avec une gamme de débit déterminée, l'aval de chacun de ces régulateurs étant connecté à nouveau à l'aval de la ligne principale, et selon que l'on se trouve dans les cas a1) a2) ou a3), on fait alors passer le gaz issu du dit dispositif de contrôle sur la ligne secondaire dont le régulateur de débit possède une gamme de débit admissible compatible avec la valeur du dit débit que l'on souhaite réguler.

6. Procédé selon l'une des revendications 1 à 5, caractérisé en ce que l'on met en oeuvre, dans le dit ensemble de séparation, des membranes de type et/ou performances différents, et que dans le cas a2) de l'étape a), on choisi d'isoler le dit ou les dits séparateurs membranaires parmi les moins performants des séparateurs membranaires de l'ensemble de séparation.

7. Procédé selon l'une des revendications 1 à 6, caractérisé en ce que l'azote délivré par le collecteur contient une concentration résiduelle d'oxygène se situant dans la gamme [0,1%,10%].

8. Installation convenant notamment pour la mise en oeuvre du procédé selon l'une des revendications 1 à 7, comprenant une ligne principale (1), un compresseur d'air (2) et au moins un poste utilisateur et comprenant, le long de la ligne principale (1), entre le compresseur d'air (2) et au moins un poste utilisateur (32), un ensemble de séparation constitué d'au moins deux lignes de séparation membranaire (4,5) montées en parallèle, chaque ligne comportant un séparateur membranaire (6, 7), au moins une des lignes de séparation comportant des moyens (8, 9, 21, 22, 34, 35) permettant de l'isoler, et chaque séparateur membranaire étant muni d'une ligne d'évacuation de son perméat vers l'extérieur et d'une ligne d'évacuation de son rejet, caractérisée en ce qu'elle comporte un collecteur (10) situé entre l'ensemble de séparation et une partie aval de la ligne principale, et sur lequel viennent se raccorder toutes les lignes d'évacuation du rejet des séparateurs membranaires (6, 7) de l'ensemble de séparation, et un dispositif de contrôle du débit (11) permettant de faire varier le débit délivré par le collecteur, situé entre ce collecteur et le poste utilisateur (32).

9. Installation selon la revendication 8, caractérisée en ce qu'elle comprend au moins une station de conditionnement d'air (3), intercalée entre le compresseur d'air et l'ensemble de séparation membranaire.

10. Installation selon l'une des revendications 8 ou 9, caractérisée en ce que la partie aval de la ligne principale comprend une capacité tampon (17), en aval du dispositif de contrôle de débit (11).

11. Installation selon l'une des revendications 8 à 10, caractérisée en ce qu'elle comprend de plus un moyen (18) permettant de déclencher l'isolation ou la remise en service d'une ou de plusieurs des lignes de l'ensemble de séparation.

12. Installation selon l'une des revendications 8 à 11, caractérisée en ce que le dispositif de contrôle de débit comprend au moins un moyen de variation du débit délivré par le collecteur, et le cas échéant un moyen (12) de mesure du dit débit et/ou de la concentration résiduelle d'oxygène (13) dans le gaz issu du collecteur et/ou de la pression du gaz issu du collecteur, et un moyen (14, 15) permettant de réguler le dit débit.

13. Installation selon l'une des revendication 8 à 12, caractérisée en ce que la partie aval de la ligne principale se subdivise, en aval du dispositif de contrôle de débit, en au moins deux lignes secondaires (23, 24, 25), chacune de ces lignes étant isolable séparément et équipée d'un régulateur de débit (26, 27, 28) compatible avec une gamme de débit déterminée, l'aval de chacun de ces régulateurs étant connecté à nouveau à la ligne principale en amont du poste utilisateur.

14. Installation selon l'une des revendications 8 à 13, caractérisée en ce que l'ensemble de séparation met en oeuvre des membranes de type et/ou performances différents.

15. Installation selon l'une des revendications 8 à 14, caractérisée en ce que au moins l'un des séparateurs membranaires de l'ensemble de séparation est constitué de membranes du type polyimide ou polyaramide.

## Claims

1. Process for providing nitrogen to a site of which the consumption varies within a given range situated above a nominal flow rate, comprising the following steps:
a) air compressed by an air compressor (2) is passed via the upstream part of a main line (1), in a separation assembly consisting of at least two membrane separation lines (4,5) mounted in parallel, each including a membrane separator (6,7), at least one of the separation lines being capable of being isolated from the main line by isolating means (8,9,34), by adopting, as the case may be, one of the following configurations :
a1) When the flow requirements of the site are situated at the normal flow rate level, all the membrane separators of the separation assembly are in service, none of the separation lines being isolated;
a2) When the flow requirements of the site exceed a predetermined flow rate, at least one of the lines (5) of the separation assembly is isolated, while keeping at least one separation line (4) and its membrane separator in service;
b) The gas obtained from the discharge side of each of the membrane separators of step a) in service is directed onto a collector (10), itself connected downstream to a downstream part of the main line;
c) The gas obtained from the permeate side of each of the membrane separators of step a) in service, enriched in oxygen, is discharged to the outside atmosphere or directed towards a user station requiring the use of such a gas enriched in oxygen;
d) The gas delivered by the collector (10) is conveyed along the downstream part of the main line towards at least one user station (32) via a device (11) for controlling the flow rate delivered by the collector (10) which increases or reduces this flow rate as required.

2. Process according to claim 1, characterized in that when the flow rate requirements of the site pass beyond the predetermined flow rate of step a2), a phase a3) is entered into where the line or lines which have been isolated in step a2) are put back into service.

3. Process according to either of claims 1 or 2, characterized in that the said flow rate is regulated during step d).

4. Process according to one of claims 1 to 3, characterized in that, during step d), a measurement is made of the flow rate delivered by the collector and/or a measurement of the residual oxygen concentration in the gas delivered by the collector and/or a measurement of the pressure of the gas emerging from the collector, and the said flow rate is regulated by using one of the said measurements as the input variable.

5. Process according to either of claims 3 or 4, characterized in that the regulation of the said flow rate is obtained in the following manner: the downstream part of the main line downstream from the control device of step d) is subdivided into at least two secondary lines (23,24,25), it being possible to isolate each of these lines separately, and is equipped with a flow rate regulator (26,27,28) compatible with a given flow rate range, the downstream part of each of these regulators being connected once more downstream to the principal line, and according to whether cases a1), a2) or a3) apply, the gas emerging from the said control device is then passed to the secondary line of which the flow rate regulator possesses a permitted flow rate range compatible with the value of the said flow rate which it is desired to regulate.

6. Process according to one of claims 1 to 5, characterized in that, in the said separation assembly, membranes are employed of different types and/or different performances and that in the case a2) of the step a), a choice is made to isolate the said membrane separator or separators from the least efficient of the membrane separators of the separation assembly.

7. Process according to one of claims 1 to 6, characterized in that the nitrogen delivered by the collector contains a residual oxygen concentration situated within the range [0.1 %, 10 %]

8. Installation which is in particular suitable for implementing the process according to one of claims 1 to 7, comprising a main line (1), an air compressor (2) and at least one user station and comprising, along the main line (1), between the air compressor (2) and at least one user station (32), a separation assembly consisting of at least two membrane separation lines (4,5) mounted in parallel, each line having a membrane separator (6,7), at least one of the separation lines having means (8,9,21,22,34,35) enabling it to be isolated, and each membrane separator being provided with a line for evacuating its permeate towards the outside and a line for evacuating its discharge, characterized in that it includes a collector (10) situated between the separation assembly and a downstream part of the main line, and to which all the lines for evacuating the discharge from the membrane separators (6,7) of the separation assembly are connected, and a device for controlling the flow rate (11) enabling the flow rate delivered by the collector to be varied, situated between this collector and the user station (32).

9. Installation according to claim 8, characterized in that it includes at least one air conditioning station (3) interposed between the air compressor and the membrane separation assembly.

10. Installation according to one of claims 8 or 9, characterized in that the downstream part of the main line includes a buffer capacity (17) downstream from the flow rate control device (11).

11. Installation according to one of claims 8 to 10, characterized in that it additionally includes means (18) enabling the isolation or the return to service of one or more of the separation assembly lines to be initiated.

12. Installation according to one of claims 8 to 11, characterized in that the flow rate control device includes at least one means for varying the flow rate delivered by the collector, and as required, means (12) for measuring the said flow rate and/or the residual oxygen concentration (13) in the gas coming from the collector and/or the pressure of the gas coming from the collector, and means (14,15) enabling the said flow rate to be regulated.

13. Installation according to one of claims 8 to 12, characterized in that the downstream part of the main line is subdivided, downstream from the flow rate control device, into at least two secondary lines (23,24,25), it being possible to isolate each of these lines separately and each of these lines being equipped with a flow rate regulator (26,27,28) compatible with a given flow rate range, the downstream part of each of these regulators being connected once more to the main line upstream from the user station.

14. Installation according to one of claims 8 to 13, characterized in that the separation assembly uses membranes of different types and/or performances.

15. Installation according to one of claims 8 to 14, characterized in that at least one of the membrane separators of the separation assembly consists of membranes of the polyimide or polyaramide type.

## Patentansprüche

1. Verfahren zur Lieferung von Stickstoff an einen Standort, dessen Verbrauch in einem gegebenen, über der Nennabgabemenge liegenden Bereich schwankt, umfassend die folgenden Schritte
a) man läßt mit einem Luftverdichter (2) verdichtete Luft über den stromauf gelegenen Bereich einer Hauptleitung (1) in eine Zerlegungsanordnung strömen, die aus mindestens zwei parallel angeordneten Membranzerlegungsleitungen (4,5) besteht, die jeweils einen Membranabscheider (6,7) aufweisen, wobei mindestens eine der Zerlegungsleitungen von der Hauptleitung durch Trennmittel (8, 9, 34) dadurch abgetrennt werden kann, daß sie je nach Fallgestaltung eine der folgenden Konfigurationen annimmt:
a1) wenn der Mengenbedarf an dem Standort der Nennabgabemenge entspricht, sind alle Membranabscheider der Zerlegungsanordnung in Betrieb, wobei keine der Zerlegungsleitungen abgetrennt wird;
a2) wenn der Mengenbedarf an dem Standort eine vorbestimmte Menge überschreitet, wird mindestens eine der Leitungen (5) der Zerlegungsanordnung so abgetrennt, daß mindestens eine Zerlegungsleitung (4) und deren Membranabscheider in Betrieb gehalten werden;
b) das an der Abgabeseite eines jeden der im Schritt a) in Betrieb befindlichen Membranabscheider erhaltene Gas wird auf einen Kollektor (10) geleitet, der selbst stromab mit einem stromab gelegenen Bereich der Hauptleitung verbunden ist;
c) das an der Permeatseite eines jeden der im Schritt a) in Betrieb befindlichen Membranabscheider erhaltene, sauerstoffangereicherte Gas wird an die Umgebung abgegeben oder zu einer Verbrauchsstelle geleitet, an der der Einsatz eines solchen sauerstoffangereicherten Gases erforderlich ist;
d) das von dem Kollektor (10) abgegebene Gas wird entlang des stromab gelegenen Bereichs der Hauptleitung über eine Vorrichtung (11) zur Regelung der von dem Kollektor (10) abgegebenen Menge, der gegebenenfalls diese Menge erhöht oder erniedrigt, zu zumindest einer Verbrauchsstelle (32) geleitet.

2. Verfahren nach Anspruch 1, dadurch gekennzeichnet, daß, wenn der Mengenbedarf an dem Standort unter die vorbestimmte Menge des Schritts a2) fällt, eine Phase a3) eingeleitet wird, in der die Leitung(en) wieder in Betrieb gesetzt wird (werden), die im Schritt a2) abgetrennt wurde(n).

3. Verfahren nach Anspruch 1 oder 2, dadurch gekennzeichnet, daß während des Schritts d) eine Regelung der besagten Menge erfolgt.

4. Verfahren nach Anspruch 1 oder 2, dadurch gekennzeichnet, daß während des Schritts d) eine Messung der von dem Kollektor abgegebenen Menge und/oder eine Messung der Restsauerstoffkonzentration in dem von dem Kollektor abgegebenen Gas und/oder eine Messung des Drucks des aus dem Kollektor stammenden Gases durchgeführt wird und eine Regelung der besagten Menge dadurch erfolgt, daß als Eingangsvariable eine der genannten Messungen verwendet wird.

5. Verfahren nach Anspruch 3 oder 4, dadurch gekennzeichnet, daß die Regelung der besagten Menge auf folgende Weise erfolgt: der stromab gelegene Bereich der Hauptleitung stromab der Regelvorrichtung des Schritts d) teilt sich in mindestens zwei Sekundärleitungen (23, 24, 25), wobei jede dieser Leitungen einzeln abtrennbar ist und mit einem Durchflußregler (26, 27, 28) ausgestattet ist, der mit einem vorgegebenen Mengenbereich kompatibel ist, wobei die stromab gelegene Seite jedes Reglers von neuem mit dem stromab gelegenen Bereich der Hauptleitung verbunden wird, und man dann, je nach dem, ob Fall a1), a2) oder a3) vorliegt, das aus der Regelvorrichtung stammende Gas in die Sekundärleitung strömen läßt, deren Durchflußregler einen zulässigen Durchflußbereich besitzt, der mit dem Wert der besagten Menge kompatibel ist, die man einzustellen wünscht.

6. Verfahren nach einem der Ansprüche 1 bis 5, dadurch gekennzeichnet, daß in der Zerlegungsanordnung Membranen unterschiedlichen Typs und/oder mit unterschiedlichen Leistungen eingesetzt werden und daß, wenn im Schritt a) Fall a2) vorliegt, vorzugsweise der oder die am wenigsten leistungsfähige(n) Membranabscheider der Trennanordnung abgetrennt wird (werden).

7. Verfahren nach einem der Ansprüche 1 bis 6, dadurch gekennzeichnet, daß der von dem Kollektor abgegebene Stickstoff eine Restsauerstoffkonzentration hat, die in dem Bereich [0.1%, 10%] liegt.

8. Anlage, die insbesondere zur Durchführung des Verfahrens nach einem der Ansprüche 1 bis 7 geeignet ist, umfassend eine Hauptleitung (1), einen Luftverdichter (2) und mindestens eine Verbraucherstelle und längs der Hauptleitung (1), zwischen dem Luftverdichter (2) und mindestens einer Verbrauchsstelle (32), eine Zerlegungsanordnung, die aus zumindest zwei parallel angeordneten Membranzerlegungsleitungen besteht, wobei jede Leitung einen Membranabscheider (6,7) umfaßt, mindestens eine der Zerlegungsleitungen Mittel (8, 9, 21, 22, 34, 35) umfaßt, die deren Abtrennung ermöglichen, und jeder Membranabscheider mit mindestens einer Leitung zum Abführen ihres Permeats nach außen und einer Entnahmeleitung für ihr Produkt verbunden ist, dadurch gekennzeichnet, daß sie einen Kollektor (10), der zwischen der Zerlegungsanordnung und einem stromab gelegenen Bereich der Hauptleitung liegt und an den sich alle Entnahmeleitungen für das Produkt der Membranabscheider (6,7) der Zerlegungsanordnung anschließen, und eine Vorrichtung zur Regelung des Durchflusses (11) umfaßt, die Vorrichtung die Veränderung der von dem Kollektor abgegebenen Menge ermöglicht und zwischen diesem Kollektor und der Verbraucherstelle (32) liegt.

9. Anlage nach Anspruch 8, dadurch gekennzeichnet, daß sie mindestens eine Luftaufbereitungsstation (3) umfaßt, die zwischen dem Luftverdichter und der Membranzerlegungsanordnung zwischengeschaltet ist.

10. Anlage nach Anspruch 8 oder 9, dadurch gekennzeichnet, daß der stromab gelegene Bereich der Hauptleitung ein Puffervolumen (17) stromab der Durchflußregelvorrichtung (11) aufweist.

11. Anlage nach einem der Ansprüche 8 bis 10, dadurch gekennzeichnet, daß sie zudem ein Mittel (18) umfaßt, das ermöglicht, das Abtrennen oder das Inbetriebsetzen einer oder mehrerer der Leitungen der Zerlegungsanordnung zu bewirken.

12. Anlage nach einem der Ansprüche 8 bis 11, dadurch gekennzeichnet, daß die Durchflußregelvorrichtung mindestens ein Mittel zur Änderung der von dem Kollektor abgegebenen Menge und gegebenenfalls ein Mittel (12) zur Messung der besagten Menge und/oder der Sauerstoffrestkonzentration (13) in dem aus dem Kollektor stammenden Gas und/oder des Drucks des aus dem Kollektor stammenden Gases und ein Mittel (14, 15), das die Regelung des besagten Durchflusses ermöglicht, aufweist.

13. Anlage nach einem der Ansprüche 8 bis 12, dadurch gekennzeichnet, daß der stromab gelegene Bereich der Hauptleitung sich stromab der Vorrichtung zur Durchflußregelung in mindestens zwei Sekundärleitungen (23, 24, 25) teilt, wobei jede der Leitungen einzeln abtrennbar ist und mit einem Durchflußregler (26, 27, 28) ausgestattet ist, der mit einem vorgegebenen Mengenbereich kompatibel ist, wobei der stromab gelegene Bereich jedes Reglers wiederum stromauf der Verbraucherstelle mit der Hauptleitung verbunden ist.

14. Anlage nach einem der Ansprüche 8 bis 13, dadurch gekennzeichnet, daß die Zerlegungsanordnung Membranen unterschiedlichen Typs und/oder mit unterschiedlichen Leistungen nutzt.

15. Anlage nach einem der Ansprüche 8 bis 14, dadurch gekennzeichnet, daß mindestens einer der Membranabscheider der Zerlegungsanordnung aus Membranen des Polyimid- oder Polyaramidtyps besteht.
